# EUROPÄISCHE PATENTSCHRIFT

(11) **EP 1 798 017 B1**
(45) Veröffentlichungstag und Bekanntmachung des Hinweises auf die Patenterteilung: **29.07.2009**
(21) Anmeldenummer: 06023891.2
(22) Anmeldetag: 17.11.2006
(51) Int. Cl.: B29C 49/64, B29C 49/78, B29C 35/08, B29C 49/06, B29C 49/12, B29C 49/16, B29C 49/68

(54) **Verfahren und Vorrichtung zur Blasformung von Behälter**
Process and apparatus for blow moulding containers
Procédé et appareil pour fabriquer des récipients par soufflage

(30) Priorität: 15.12.2005 DE 102005060429
(43) Veröffentlichungstag der Anmeldung: 20.06.2007
(73) Patentinhaber: KHS Corpoplast GmbH & Co. KG, 20539 Hamburg (DE)
(72) Erfinder: Lewin, Frank, 22889 Tangstedt (DE); Linke, Michael, 22047 Hamburg (DE); Litzenberg, Michael, 21502 Geesthacht (DE); Baumgarte, Rolf, 22926 Tangstedt (DE); Van Hamme, Thomas, 24629 Kisdorf (DE)
(74) Vertreter: Klickow, Hans-Henning

(56) Entgegenhaltungen:
- WO-A-20/06056673
- WO-A-20/06060690
- DE-A1- 19 736 462
- DE-A1- 19 909 542
- DE-U1- 20 020 150

## Beschreibung

Die Erfindung betrifft ein verfahren zur Blasformung von Behältern, bei dem ein Vorformling aus einem thermoplastischem Material nach einer thermischen Konditionierung entlang eines Transportweges im Bereich einer Heizstrecke innerhalb einer Blasform durch Blasdruckeinwirkung in den Behälter umgeformt wird, und bei dem von mindestens einem Heizstrahler im Bereich der Heizstrecke eine Heizstrahlung mit einer maximalen Strahlungsintensität bei Wellenlängen zwischen 0,4 Mikrometer und 1,0 Mikrometer emittiert wird.

Die Erfindung betrifft darüber hinaus eine Vorrichtung zur Blasformung von Behältern aus einem thermoplastischen Material, die mindestens eine entlang eines Transportweges eines Vorformlings angeordnete Heizstrecke und eine mit einer Blasform versehene Blasstation aufweist, und bei der mindestens ein im Bereich der Heizstrecke angeordneter Heizstrahler ein Strahlungsemissionsspektrum mit einer maximalen Strahlungsintensität in einem Wellenlängenbereich von 0,4 Mikrometer bis 1,0 Mikrometer aufweist.

Bei einer Behälterformung durch Blasdruckeinwirkung werden Vorformling aus einem thermoplastischen Material, beispielsweise vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Binstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträder angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchführung der Beheizung werden die Vorformlinge typischerweise auf Transportdorne aufgesteckt, die den Vorformling entweder durch die gesamte Blasmaschine transportieren oder die lediglich im Bereich der Heizeinrichtung umlaufen. Bei einer stehenden Beheizung der Vorformlinge derart, daß die Mündungen der Vorformlinge in lotrechter Richtung nach unten orientiert sind, werden die Vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen.

Ein wesentliches Problem bei der Verwendung von konventionellen Infrarot-Strahlern zur Beheizung der Vorformlinge bestehe darin, daß der überwiegende Strahlungsanteil bereits in der unmittelbaren Nähe der Oberfläche des Vorformlings in wärme umgesetzt wird und daß eine Temperierung der inneren Wandungsbereiche des Vorformlings nur durch Wärmeausbreitung innerhalb des thermoplastischen Materials erfolgt. Da das thermoplastische Material ausgeprägte thermisch isolierende Eigenschaften aufweist, ergibt sich für eine ausreichende Wärmeausbreitung ein zeitbedarf für die Beheizung der Vorformlinge von etwa 20 Sekunden. Zur Vermeidung einer Überhitzung der Oberflächenbereiche des Vorformlings erfolgt gleichzeitig zur Beheizung auch ein Anblasen mit Kühlluft. Hieraus resultiert ein relativ hoher Energieaufwand für die Durchführung der Beheizung.

Zur Unterstützung einer möglichst gleichmäßigen aktiven Beheizung der Vorformlinge durch die Wanddicke des Vorformlings hindurch ist es ebenfalls bekannt, alternativ oder ergänzend zu einer Beheizung mit Infrarotstrahlern auch eine Beheizung mit HF-Strahlung bzw. Mikrowellenstrahlung durchgeführt. Diese Strahlungen machen jedoch Abschirmungen erforderlich, um einen Strahlungsaustritt zu verhindern bzw. abzuschwächen. Darüber hinaus erweist sich eine Umsetzung dieser Strahlung im vorformlingsmaterial in wärme als zeitaufwendig, so daß keine nennenswerte verkürzung der erforderlichen Heizzeiten erreicht werden konnte.

Aus der DE 197 36 462 A1 ist es bereits bekannt, Vorformlinge unter Verwendung einer Heizstrahlung im nahen Infrarotbereich derart zu erwärmen, daß eine Heizstrahlung mit einer maximalen Strahlungsintensität in einem Bereich von 0,8 µm bis 1,0 µm emittiert wird.

In der DE 200 20 150 U1 wird ein ähnliches Heizverfahren beschrieben, bei dem hinsichtlich der Wellenlängen der Heizstrahlung ein Intensitätsbereich von 0,8 µm bis 1,5 µm definiert ist.

In der DE 199 09 542 A1 wird ein Infrarot-Strahler mit einem speziell gestalteten Reflektor beschrieben. Eine Mehrzahl relativ zueinander winklig angeordneter Reflektorflächen führen zu einer definierten Ausrichtung der reflektierten Strahlung in Richtung auf den zu beheizenden Vorformling. Zur Unterstützung einer Wellenlänge der abgegebenen Strahlung mit einem Strahlungsmaximum im Bereich des nahen Infrarot werden bevorzugte Betriebstemperaturen des Materials der Heizwendel des Strahlers angegeben, insbesondere eine Materialtemperatur von mehr als 2900° Kelvin.

Aufgabe der vorliegenden Erfindung ist es, ein Verfahren der einleitend genannten Art derart zu verbessern, daß mit geringem maschinenbaulichen Aufwand eine qualitativ hochwertige Beheizung bei gleichzeitig hohen Durchsatzraten unterstützt wird.

Diese Aufgabe wird erfindungsgemäß dadurch gelöst, daß die Heizstrahlung mit einer Farbtemperatur von mindestens 3500° Kelvin emittiert wird, daß mindestens 50% der Leistung der emittierten Heizstrahlung in einem Wellenlängenbereich von +/- 0,5 Mikrometer bezogen auf die Wellenlänge der maximalen Strahlungsintensität emittiert werden und daß ein Teil der vom Heizstrahler emittierten Heizstrahlung von einem Filter zurückgehalten wird.

weitere Aufgabe der vorliegenden Erfindung ist es, eine Vorrichtung der einleitend genannten Art derart zu konstruieren, daß hohe Durchsatzraten bei einfachem konstruktiven Aufbau unterstützt werden.

Diese Aufgabe wird erfindungsgemäß dadurch gelöst, daß der Heizstrahler eine Strahlungscharakteristik mit einer Farbtemperatur von mindestens 3500° Kelvin aufweist, der Heizstrahler eine Strahlungscharakteristik mit einer Leistungsabstrahlung von mindestens 50% der Gesamtstrahlungsleistung in einem Bereich von +/- 0,5 Mikrometer relativ zur Wellenlänge der maximalen Strahlungsintensität aufweist und daß der Heizstrahler einen frequenzselektiven Filter aufweist.

Durch die Verwendung eines Heizstrahlers mit einem Maximum der Strahlungsintensität im Wellenlängenbereich von 0,4 Mikrometer bis 1,0 Mikrometer wird ein optimaler Kompromiß zwischen einer hohen Eindrizigungsfähigkeit der Strahlung in das Material des Vorformlings, einer effektiven Umsetzung der Strahlungsenergie in Wärmeenergie sowie einer räumlich kompakten Realisierung der Heizungsanordnung bereitgestellt. Der gewählte Längenbereich macht darüber hinaus keine speziellen Abschirmungen erforderlich, um eine Gefährdung der Umgebung zu vermeiden.

Ein guter Kompromiß zwischen einer ausreichenden Eindringtiefe der Heizstrahlung in das Material der Vorformlinge und einer hohen Umsetzungsrate der Strahlungsenergie in Wärmeenergie wird dadurch bereitgestellt, daß die maximale Strahlungsintensität mit einer Welzenlänge von etwa 0,8 Mikrometer emittiert wird. Unter Strahlungsintensität wird insbesondere die einer bestimmten Wellenlänge zugeordnete Signalamplitude bzw. der dieser Wellenlänge zugeordnete Energiegehalt verstanden.

Für eine Temperierung von PET erweist es sich als besonders zweckmäßig, daß die Heizstrahlung mit einer Farbtemperatur von mindestens 5000° Kelvin emittiert wird.

Ein optimales Heizverhalten wird dadurch bereitgestellt, daß die Heizstrahlung mit einer Farbtemperatur von etwa 6000° Kelvin imitiert wird.

Das Heizverhalten wird nochmals dadurch verbessert, daß 50% der Leistung der emittierten Heizstrahlung in einem Wellenlängenbereich von +/- 0,4 Mikrometer bezogen auf die Wellenlänge der maximalen Strahlungsintensität emittiert werden.

Idealerweise ist auch daran gedacht, daß 50% der Leistung der emittierten Heizstrahlung in einem Wellenlängenbereich von +/- 0,3 Mikrometer bezogen auf die Wellenlänge der maximalen Strahlungsintensität emittiert werden.

Eine Bereitstellung der Heizstrahlung mit hoher Zuverlässigkeit und ausreichend langer Betriebsfähigkeit der Heizstrahler kann dadurch erfolgen, daß die Heizstrahlung von einer Gasentladungslampe emittiert wird.

Eine optimale Steuerbarkeit der Heizstrahlung bei geringen verlustleistungen kann dadurch erreicht werden, daß die Heizstrahlung von einer LED-Anordnung emittiert wird.

Eine weitere Optimierung der Strahlungscharakteristik kann dadurch erfolgen, daß der Heizstrahler mit einem frequenzselektiven Reflektor versehen ist.

Eine nochmals verbesserte Nutzung der emittierten Heizstrahlung kann dadurch erfolgen, daß mindestens ein Teil der Heizstrahlung von einem in Strahlungsrichtung hinter den zu beheizenden Vorformlingen positionierten frequenzselektiven Reflektor zurückgeworfen wird.

Eine Zurückhaltung unerwünschter Anteile des vom Heizstrahler emittierten Strahlungsspektrums erfolgt dadurch , daß ein Teil der vom Heizstrahler emittierten Heizstrahlung von einem Filter zurückgehalten wird.

Zur Anpassung der Strahlungsintensität an einen aktuell vorliegenden Heizungsbedarf wird vorgeschlagen, daß der Heizstrahler mit einer elektrischen Intensitätssteuerung gekoppelt wird.

Eine andere Ausführungsvariante besteht darin, daß der Heizstrahler mit einer mechanischen Intensitätssteuerung gekoppelt wird.

Eine Ausblendung aktuell nicht benötigter Strahlungsanteile bei einem im wesentlichen gleichmäßigem Betrieb der Heizstrahler wird dadurch erreicht, daß mindestens ein Teil der Heizstrahlung in eine vorgebbare Richtung abgelenkt wird.

Eine weitere Variante zur Bereitstellung einer Steuerbarkeit der Heizleistung bei einem gleichbleibenden Betrieb der Heizstrahler erfolgt dadurch, daß mindestens ein Teil der Heizstrahlung in eine vorgebbare Richtung gespiegelt wird.

Eine sehr kompakte Ausbildung einer Steuereinheit für die Heizstrahlung kann dadurch erreicht werden, daß mindestens ein Teil der Heizstrahlung durch ein steuerbares Mikrolinsenfeld gelenkt wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,

- Fig. 5: eine Prinzipdarstellung einer Gasentladungslampe und
- Fig. 6: eine Prinzipdarstellung eines Feldes von Leuchtdioden.

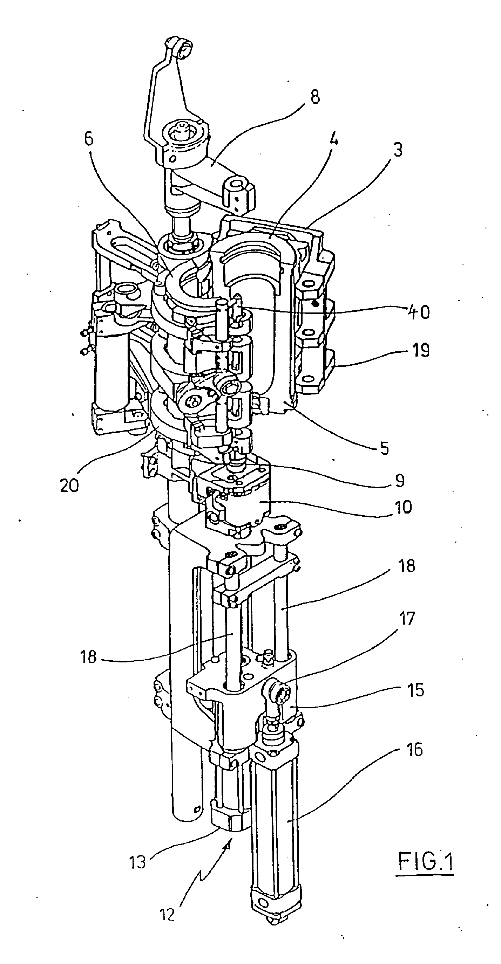

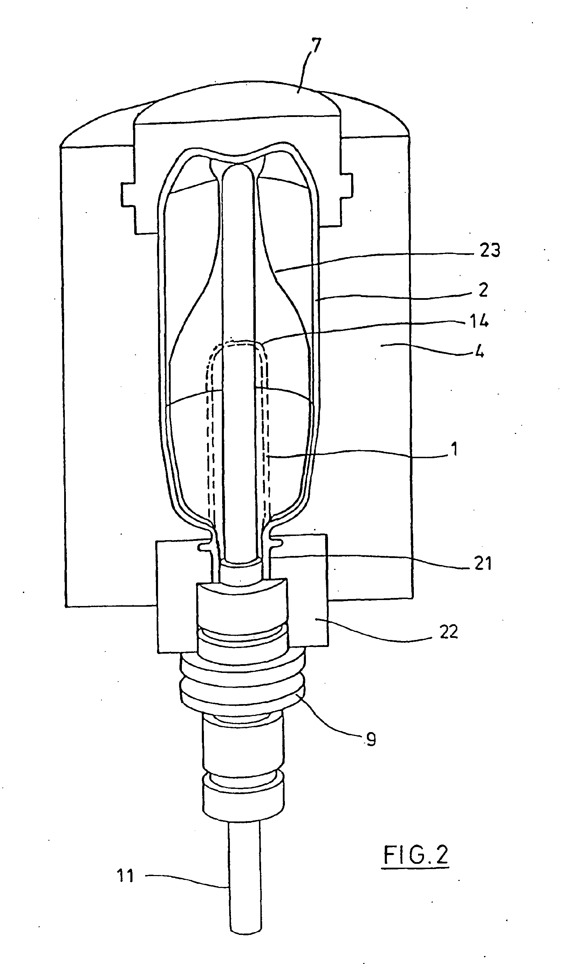

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

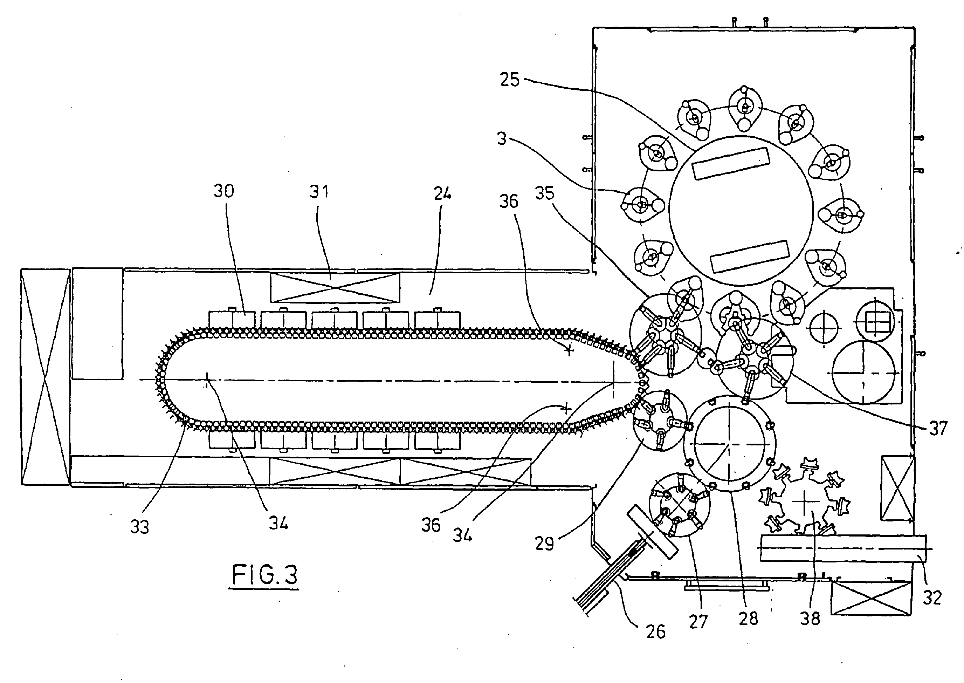

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

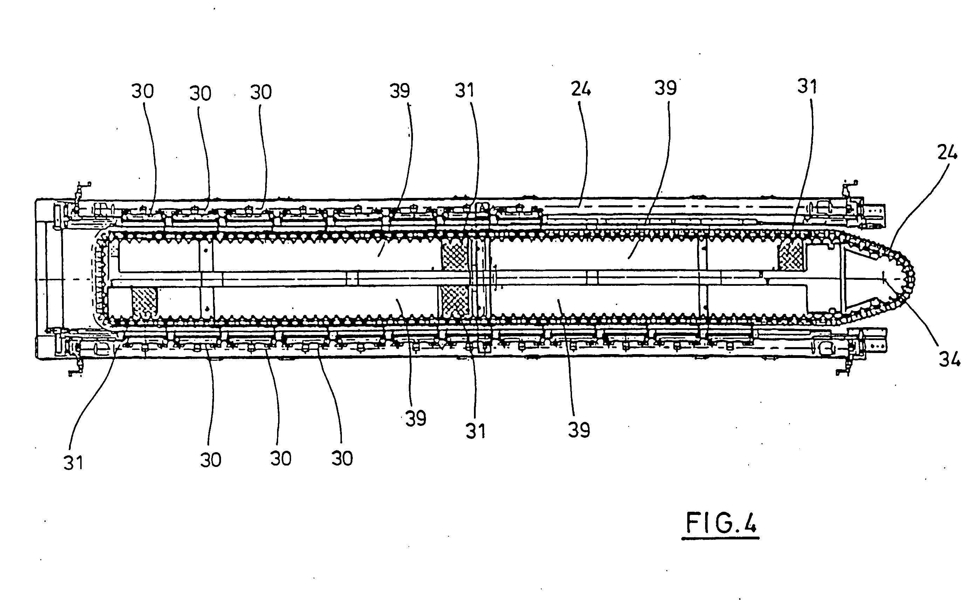

In der in Fig. 4 dargestellten modifizierten Heizstrecke (24) können durch die größere Anzahl von Heizstrahlern (30) eine größere Menge von Vorformlingen (1) je zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

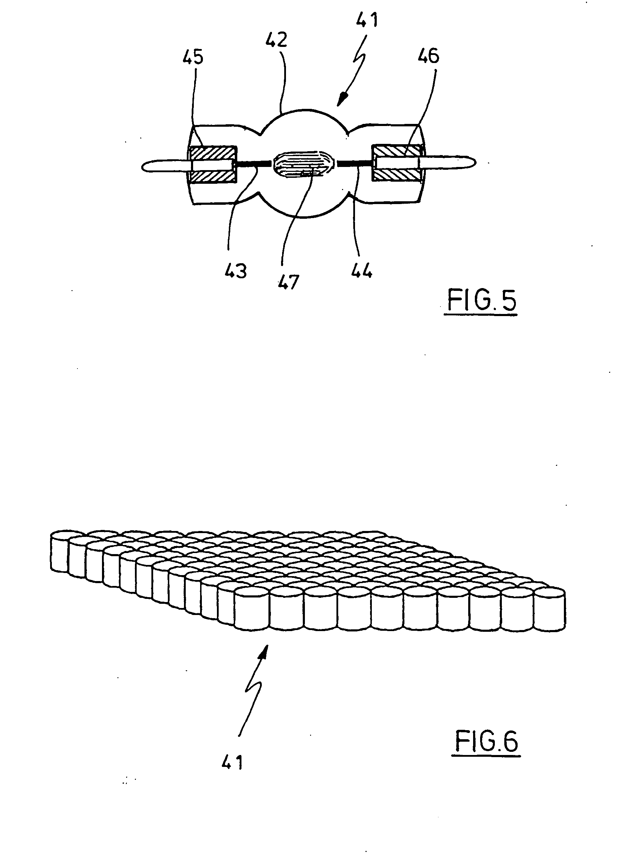

Fig. 5 zeigt den prinzipiellen Aufbau einer Strahlungsquelle (41) des Heizstrahlers (30). Beim dargestellten Ausführungsbeispiel ist die Strahlungsquelle (41) als eine Gasentladungslampe ausgebildet, die im wesentlichen aus einem Glaskolben (42) und zwei Elektroden (43, 44) ausgebildet, die von Sockeln (45, 46) gehaltert sind. Der Glaskolben (42) ist mit einem Gas gefüllt, beispielsweise mit Xenon.
Zur Einleitung einer Strahlungsemission wird an die Elektroden (43, 44) eine Hochspannung von etwa 20000 bis 25000 Volt angelegt und hierdurch ein Lichtbogen (47) gezündet.
Als Material für den Glaskolben (42) wird aufgrund der erforderlichen Temperaturbeständigkeit typischerweise Quarzglas verwendet. Statt Xenon können auch andere Edelgase zur Füllung des Glaskolbens verwendet werden.

Gemäß einer Ausführungsform ist in den Glaskolben (42) Quecksilber eingebracht und das ebenfalls vorhandene Edelgas dient lediglich als Startgas zur Zündung des Lichtbogens (47). Nach einer Zündung des Lichtbogens (47) verdampft das Quecksilber und stellt das erforderliche Entladungsgas bereit.

Als Material für die Elektroden (43, 44) kann Wolfram verwendet werden. Vorteilhaft für die Vorgabe einer geeigneten Strahlungsemission ist auch die Zugabe von Metallsalzen in den Innenraum des Glaskolbens (42). Hierdurch wird insbesondere das Emissionsspektrum der Strahlung beeinflußt.

Fig. 6 zeigt ein anderes Ausführungsbeispiel zur Konstruktion eines Heizstrahlers (30). Hier sind die Strahlungsquellen (41) als lichtemittierende Dioden ausgebildet. Derzeit verfügbare LED's generieren bei einem Durchmesser von etwa 8 mm eine Leistung von 10 Watt. Es läßt sich hierdurch auf einer Fläche von 10 mal 10 cm eine Strahlerleistung zwischen 1,0 und 1,5 Kilowatt installieren. Aufgrund der nahezu vollständigen Umsetzung der Versorgungsleistung der LED's in abgestrahlte Leistung wird eine extrem kompakte und energieeffektive Beheizung bereitgestellt.

Eine typische Anordnung der Strahlungsquellen (41) im Bereich des Heizstrahlers (30) erfolgt derart, daß zumindest eine Mehrzahl von Strahlungsquellen (21) übereinander angeordnet sind, um eine Temperaturprofilierung in einer Längsrichtung des vorformlings (1) durchführen zu können. In Abhängigkeit von der baulichen Dimensionierung der Strahlungsquellen (41) ist es auch möglich, zusätzlich oder alternativ zur Anordnung einer Mehrzahl von Strahlungsquellen (41) übereinander auch eine Mehrzahl von Strahlungsquellen (41) nebeneinander anzuordnen. Bei einer Verwendung von LED's als Strahlungsquellen (41) werden bevorzugt zweidimensionale Felder von Strahlungsquellen (41) aufgebaut, um eine hohe Strahlungsintensität zu erreichen. Die einzelnen LED's können hierbei jeweils separat oder in Gruppen zusammengefaßt angesteuert werden, um die jeweilige Strahlungsintensität vorzugeben.

Eine elektrische Intensitätsregelung der Strahlungsquellen (41) kann in unterschiedlicher Art und Weise erfolgen. Geeignet sind insbesondere Regelungsverfahren, bei denen die Farbtemperatur der emittierten Strahlung nicht oder nur unwesentlich verändert wird. Bei einer Strahlungsgenerierung unter Verwendung von Lichtbögen ist insbesondere daran gedacht, bei im wesentlichen gleicher Versorgungsspannung den Strom durch den Lichtbogen hindurch zu variieren. Ebenfalls ist es möglich, den Strom oder die Spannung in Form einer Pulsbreitenmodulation zu variieren und hierdurch eine gewünschte mittlere Energieabgabe bereitzustellen.

Auch bei einer Ansteuerung von LED's können Variationen der Versorgungsspannung, des Versorgungsstromes oder eine Pulsbreitenmodulation von Spannung und/oder Strom zum Einsatz kommen.

## Patentansprüche

1. Verfahren zur Blasformung von Behältern (2), bei dem ein Vorformling (1) aus einem thermoplastischem Material nach einer thermischen Konditionierung entlang eines Transportweges im Bereich einer Heizstrecke (24) innerhalb einer Blasform (4) durch Blasdruckeinwirkung in den Behälter (2) umgeformt wird, und bei dem von mindestens einem Heizstrahler (30) im Bereich der Heizstrecke (24) eine Heizstrahlung mit einer maximalen Strahlungsintensität bei Wellenlängen zwischen 0,4 Mikrometer und 1,0 Mikrometer emittiert wird, **dadurch gekennzeichnet, daß** die Heizstrahlung mit einer Farbtemperatur von mindestens 3500° Kelvin emittiert wird, daß mindestens 50% der Leistung der emittierten Heizstrahlung in einem Wellenlängenbereich von +/- 0,5 Mikrometer bezogen auf die Wellenlänge der maximalen Strahlungsintensität emittiert werden und daß ein Teil der vom Heizstrahler (30) emittierten Heizstrahlung von einem Filter zurückgehalten wird.

2. Verfahren nach Anspruch 1, **dadurch gekennzeichnet, daß** die maximale Strahlungsintensität bei einer Wellenlänge von etwa 0,8 Mikrometer emittiert wird.

3. Verfahren nach Anspruch 1 oder 2, **dadurch gekennzeichnet, daß** die Heizstrahlung mit einer Farbtemperatur von etwa 3500° Kelvin emittiert wird.

4. Verfahren nach Anspruch 1 oder 2, **dadurch gekennzeichnet, daß** die Heizstrahlung mit einer Farbtemperatur von mindestens 5000° Kelvin emittiert wird.

5. Verfahren nach Anspruch 1 oder 2, **dadurch gekennzeichnet, daß** die Heizstrahlung mit einer Farbtemperatur von etwa 6000° Kelvin emittiert wird.

6. Verfahren nach einem der Ansprüche 1 bis 5, **dadurch gekennzeichnet, daß** 50% der Leistung der emittierten Heizstrahlung in einem Wellenlängenbereich von +/- 0,4 Mikrometer bezogen auf die Wellenlänge der maximalen Strahlungsintensität emittiert werden.

7. Verfahren nach einem der Ansprüche 1 bis 5, **dadurch gekennzeichnet, daß** 50% der Leistung der emittierten Heizstrahlung in einem Wellenlängenbereich von +/- 0,3 Mikrometer bezogen auf die Wellenlänge der maximalen Strahlungsintensität emittiert werden.

8. Verfahren nach einem der Ansprüche 1 bis 7, **dadurch gekennzeichnet, daß** die Heizstrahlung von einer Gasentladungslampe emittiert wird.

9. Verfahren nach einem der Ansprüche 1 bis 7, **dadurch gekennzeichnet, daß** die Heizstrahlung von einer LED-Anordnung emittiert wird.

10. Verfahren nach einem der Ansprüche 1 bis 9, **dadurch gekennzeichnet, daß** der Heizstrahler (30) mit einem frequenzselektiven Reflektor versehen ist.

11. Verfahren nach einem der Ansprüche 1 bis 10, **dadurch gekennzeichnet, daß** mindestens ein Teil der Heizstrahlung von einem in Strahlungsrichtung hinter den zu beheizenden Vorformlingen positionierten frequenzselektiven Reflektor zurückgeworfen wird.

12. verfahren nach einem der Ansprüche 1 bis 11, **dadurch gekennzeichnet, daß** der Heizstrahler (30) mit einer elektrischen Intensitätssteuerung gekoppelt wird.

13. Verfahren nach einem der Ansprüche 1 bis 11, **dadurch gekennzeichnet, daß** der Heizstrahler (30) mit einer mechanischen Intensitätssteuerung gekoppelt wird.

14. Verfahren nach Anspruch 13, **dadurch gekennzeichnet, daß** mindestens ein Teil der Heizstrahlung in eine vorgebbare Richtung abgelenkt wird.

15. Verfahren nach Anspruch 13, **dadurch gekennzeichnet, daß** mindestens ein Teil der Heizstrahlung in eine vorgebbare Richtung gespiegelt wird.

16. Verfahren nach einem der Ansprüche 1 bis 15, **dadurch gekennzeichnet, daß** mindestens ein Teil der Heizstrahlung durch ein steuerbares Mikrolinsenfeld gelenkt wird.

17. Vorrichtung zur Blasformung von Behältern (2) aus einem thermoplastischen Material, die mindestens eine entlang eines Transportweges eines Vorformlings (1) angeordnete Heizstrecke (24) und eine mit einer Blasform (4) versehene Blasstation (3) aufweist, und bei der mindestens ein im Bereich der Heizstrecke (24) angeordneter Heizstrahler (30) ein Strahlungsemissionsspektrum mit einer maximalen Strahlungsintensität in einem Wellenlängenbereich von 0,4 Mikrometer bis 1,0 Mikrometer aufweist, **dadurch gekennzeichnet, daß** der Heizstrahler (30) eine Strahlungscharakteristik mit einer Farbtemperatur von mindestens 3500° Kelvin aufweist, der Heizstrahler (30) eine Strahlungscharakteristik mit einer Leistungsabstrahlung von mindestens 50% der Gesamtstrahlungsleistung in einem Bereich von +/- 0,5 Mikrometer relativ zur Wellenlänge der maximalen Strahlungsintensität aufweist und daß der Heizstrahler (30) einen frequenzselektiven Filter aufweist.

18. Vorrichtung nach Anspruch 17, **dadurch gekennzeichnet, daß** der Heizstrahler (30) eine Strahlungscharakteristik mit einer maximalen Strahlungsintensität bei einer Wellenlänge von etwa 0,8 Mikrometer aufweist.

19. Vorrichtung nach Anspruch 17 oder 18, **dadurch gekennzeichnet, daß** der Heizstrahler (30) eine Strahlungscharakteristik mit einer Farbtemperatur von etwa 3500° Kelvin aufweist.

20. Vorrichtung nach Anspruch 17 oder 18, **dadurch gekennzeichnet, daß** der Heizstrahler (30) eine Strahlungscharakteristik mit einer Farbtemperatur von mindestens 5000° Kelvin aufweist.

21. Vorrichtung nach Anspruch 17 der 18, **dadurch gekennzeichnet, daß** der Heizstrahler (30) eine Strahlungscharakteristik mit einer Farbtemperatur von etwa 6000° Kelvin aufweist.

22. Vorrichtung nach einem der Ansprüche 17 bis 21, **dadurch gekennzeichnet, daß** der Heizstrahler (30) eine Strahlungscharakteristik mit einer Leistungsabstrahlung von mindestens 50% der Gesamtstrahlungsleistung in einem Bereich von +/- 0,4 Mikrometer relativ zur Wellenlänge der maximalen Strahlungsintensität aufweist.

23. Vorrichtung nach einem der Ansprüche 17 bis 22, **dadurch gekennzeichnet, daß** der Heizstrahler (30) eine Strahlungscharakteristik mit einer Leistungsabstrahlung von mindestens 50% der Gesamtstrahlungsleistung in einem Bereich von +/- 0,3 Mikrometer relativ zur Wellenlänge der maximalen Strahlungsintensität aufweist.

24. Vorrichtung nach einem der Ansprüche 17 bis 23, **dadurch gekennzeichnet, daß** der Heizstrahler (30) als eine Gasentladungslampe ausgebildet ist.

25. Vorrichtung nach einem der Ansprüche 17 bis 23, **dadurch gekennzeichnet, daß** der Heizstrahler (30) als eine LED-Anordnung ausgebildet ist.

26. Vorrichtung nach einem der Ansprüche 17 bis 23, **dadurch gekennzeichnet, daß** der Heizstrahler (30) mit einem frequenzselektiven Reflektor versehen ist.

27. Vorrichtung nach einem der Ansprüche 17 bis 26, **dadurch gekennzeichnet, daß** in Strahlungsrichtung vom Heizstrahler (30) aus gesehen hinter den zu beheizenden Vorformling (1) ein frequenzselektiver Reflektor angeordnet ist.

28. Vorrichtung nach einem der Ansprüche 17 bis 27, **dadurch gekennzeichnet, daß** der Heizstrahler (30) mit einer elektrischen Intensitätssteuerung gekoppelt ist.

29. Vorrichtung nach einem der Ansprüche 17 bis 27, **dadurch gekennzeichnet, daß** der Heizstrahler (30) mit einer mechanischen Intensitätssteuerung gekoppelt ist.

30. Vorrichtung nach Anspruch 29, **dadurch gekennzeichnet, daß** die mechanische Intensitätssteuerung aus mindestens einem verstellbaren Ablenkungselement für die Heizstrahlung ausgebildet ist.

31. Vorrichtung nach Anspruch 29, **dadurch gekennzeichnet, daß** die mechanische Intensitätssteuerung aus mindestens einem verstellbaren Spiegelelement für die Heizstrahlung ausgebildet ist.

32. Vorrichtung nach einem der Ansprüche 17 bis 31, **dadurch gekennzeichnet, daß** der Heizstrahler (30) mit einem Mikrolinsenfeld zur Strahlungsteuerung versehen ist.

## Claims

1. Method for blow-moulding containers (2), wherein a preform (1) of a thermoplastic material is shaped to form the container (2) after a thermal processing operation along a transport path in the region of a heating zone (24) within a blowing mould (4) under the action of blowing pressure, and wherein, in the region of the heating zone (24), heat radiation is emitted by at least one radiant heater (30) and has a maximum radiation intensity at wavelengths of between 0.4 micrometre and 1.0 micrometre, **characterised in that** the heat radiation is emitted with a colour temperature of at least 3500° Kelvin, **in that** at least 50% of the power of the emitted heat radiation is emitted in a wavelength range of +/- 0.5 micrometre with respect to the wavelength of the maximum radiation intensity, and **in that** a portion of the heat radiation emitted by the radiant heater (30) is retained by a filter.

2. Method according to claim 1, **characterised in that** the maximum radiation intensity is emitted at a wavelength of approximately 0.8 micrometre.

3. Method according to claim 1 or claim 2, **characterised in that** the heat radiation is emitted with a colour temperature of approximately 3500° Kelvin.

4. Method according to claim 1 or claim 2, **characterised in that** the heat radiation is emitted with a colour temperature of at least 5000° Kelvin.

5. Method according to claim 1 or claim 2, **characterised in that** the heat radiation is emitted with a colour temperature of approximately 6000° Kelvin.

6. Method according to any one of claims 1 to 5, **characterised in that** 50% of the power of the emitted heat radiation is emitted in a wavelength range of +/- 0.4 micrometre with respect to the wavelength of the maximum radiation intensity.

7. Method according to any one of claims 1 to 5, **characterised in that** 50% of the power of the emitted heat radiation is emitted in a wavelength range of +/- 0.3 micrometre with respect to the wavelength of the maximum radiation intensity.

8. Method according to any one of claims 1 to 7, **characterised in that** the heat radiation is emitted by a gas discharge lamp.

9. Method according to any one of claims 1 to 7, **characterised in that** the heat radiation is emitted by an LED arrangement.

10. Method according to any one of claims 1 to 9, **characterised in that** the radiant heater (30) is provided with a frequency-selective reflector.

11. Method according to any one of claims 1 to 10, **characterised in that** at least a portion of the heat radiation is reflected by a frequency-selective reflector which is positioned in the radiation direction downstream of the preforms to be heated.

12. Method according to any one of claims 1 to 11, **characterised in that** the radiant heater (30) is coupled to an electrical intensity control unit.

13. Method according to any one of claims 1 to 11, **characterised in that** the radiant heater (30) is coupled to a mechanical intensity control unit.

14. Method according to claim 13, **characterised in that** at least a portion of the heat radiation is redirected in a predeterminable direction.

15. Method according to claim 13, **characterised in that** at least a portion of the heat radiation is reflected in a predeterminable direction.

16. Method according to any one of claims 1 to 15, **characterised in that** at least a portion of the heat radiation is redirected by a controllable microlens array.

17. Device for blow-moulding containers (2) from a thermoplastic material which has at least one heating zone (24) which is arranged along a transport path of a preform (1) and a blowing station (3) which is provided with a blowing mould (4), and in which at least one radiant heater (30) which is arranged in the region of the heating zone (24) has a radiation emission spectrum with a maximum radiation intensity in a wavelength range of from 0.4 micrometre to 1.0 micrometre, **characterised in that** the radiant heater (30) has a radiation characteristic with a colour temperature of at least 3500° Kelvin, the radiant heater (30) has a radiation characteristic having a radiation power of at least 50% of the total radiation power in a range of +/- 0.5 micrometre relative to the wavelength of the maximum radiation intensity, and **in that** the radiant heater (30) has a frequency-selective filter.

18. Device according to claim 17, **characterised in that** the radiant heater (30) has a radiation characteristic having a maximum radiation intensity at a wavelength of approximately 0.8 micrometre.

19. Device according to claim 17 or claim 18, **characterised in that** the radiant heater (30) has a radiation characteristic having a colour temperature of approximately 3500° Kelvin.

20. Device according to claim 17 or claim 18, **characterised in that** the radiant heater (30) has a radiation characteristic having a colour temperature of at least 5000° Kelvin.

21. Device according to claim 17 or claim 18, **characterised in that** the radiant heater (30) has a radiation characteristic having a colour temperature of approximately 6000° Kelvin.

22. Device according to any one of claims 17 to 21, **characterised in that** the radiant heater (30) has a radiation characteristic having a radiation power of at least 50% of the total radiation power in a range of +/- 0.4 micrometre relative to the wavelength of the maximum radiation intensity.

23. Device according to any one of claims 17 to 22, **characterised in that** the radiant heater (30) has a radiation characteristic having a radiation power of at least 50% of the total radiation power in a range of +/- 0.3 micrometre relative to the wavelength of the maximum radiation intensity.

24. Device according to any one of claims 17 to 23, **characterised in that** the radiant heater (30) is constructed as a gas discharge lamp.

25. Device according to any one of claims 17 to 23, **characterised in that** the radiant heater (30) is constructed as an LED arrangement.

26. Device according to any one of claims 17 to 23, **characterised in that** the radiant heater (30) is provided with a frequency-selective reflector.

27. Device according to any one of claims 17 to 26, **characterised in that**, when viewed in the emission direction of the radiant heater (30), a frequency-selective reflector is arranged downstream of the preform (1) to be heated.

28. Device according to any one of claims 17 to 27, **characterised in that** the radiant heater (30) is coupled to an electrical intensity control unit.

29. Device according to any one of claims 17 to 27, **characterised in that** the radiant heater (30) is coupled to a mechanical intensity control unit.

30. Device according to claim 29, **characterised in that** the mechanical intensity control unit is constructed from at least one adjustable redirecting element for the heat radiation.

31. Device according to claim 29, **characterised in that** the mechanical intensity control unit is constructed from at least one adjustable mirror element for the heat radiation.

32. Device according to any one of claims 17 to 31, **characterised in that** the radiant heater (30) is provided with a microlens array for controlling radiation.

## Revendications

1. Procédé pour le formage par soufflage de récipients (2), dans lequel une préforme (1) en matière thermoplastique est transformée en un récipient (2) sous l'effet de la pression de soufflage, après un conditionnement thermique le long d'une voie de transport, dans la région d'un parcours de chauffage (24), à l'intérieur d'un moule (4), sous l'effet de la pression de soufflage, et dans lequel un rayonnement thermique d'une intensité de rayonnement maximale, à des longueurs d'onde situées entre 0,4 micromètre et 1,0 micromètre, est émis par au moins un radiateur (30), dans la région du parcours de chauffage (24), **caractérisé en ce que** le rayonnement thermique est émis à une température de couleur d'au moins 3500° Kelvin, que 50%, au moins, de la puissance du rayonnement thermique sont émis dans une gamme de longueurs d'onde de +/- 0,5 micromètre par rapport à la longueur d'onde de l'intensité de rayonnement maximale, et qu'une partie du rayonnement thermique, émis par le radiateur (30), est retenue par un filtre.

2. Procédé selon la revendication 1, **caractérisé en ce que** l'intensité de rayonnement maximale est émise à une longueur d'onde d'environ 0,8 micromètre.

3. Procédé selon revendication 1 ou 2, **caractérisé en ce que** le rayonnement thermique est émis à une température de couleur d'environ 3500° Kelvin.

4. Procédé selon revendication 1 ou 2, **caractérisé en ce que** la radiation thermique est émise à une température de couleur d'au moins 5000° Kelvin.

5. Procédé selon revendication 1 ou 2, **caractérisé en ce que** le rayonnement thermique est émis à une température de couleur d'environ 6000° Kelvin.

6. Procédé selon l'une des revendications 1 à 5,
**caractérisé en ce que** 50% de la puissance du rayonnement thermique émis sont émis dans une gamme de longueurs d'onde de +/- 0,4 micromètre par rapport à une longueur d'onde de l'intensité de rayonnement maximale.

7. Procédé selon l'une des revendications 1 à 5,
**caractérisé en ce que** 50% de la puissance du rayonnement thermique émis sont émis dans une gamme de longueurs d'onde de +/- 0,3 micromètre par rapport à la longueur d'onde de l'intensité de rayonnement maximale

8. Procédé selon l'une des revendications 1 à 7,
**caractérisé en ce que** le rayonnement thermique est émis par une lampe à décharge gazeuse.

9. Procédé selon l'une des revendications 1 à 7,
**caractérisé en ce que** le rayonnement thermique est émis par un circuit à LED.

10. Procédé selon l'une des revendications 1 à 9,
**caractérisé en ce que** le radiateur (30) est pourvu d'un réflecteur sélectif en fréquence.

11. Procédé selon l'une des revendications 1 à 10,
**caractérisé en ce qu'**au moins une partie du rayonnement thermique est renvoyée par un réflecteur sélectif en fréquence, qui, dans la direction du rayonnement, est positionné derrière la préforme à chauffer.

12. Procédé selon l'une des revendications 1 à 11,
**caractérisé en ce que** le radiateur (30) est couplé avec une commande d'intensité électrique.

13. Procédé selon l'une des revendications 1 à 11,
**caractérisé en ce que** le radiateur (30) est couplé avec une commande mécanique d'intensité.

14. Procédé selon la revendication 13, **caractérisé en ce qu'**au moins une partie du rayonnement thermique est déviée dans une direction pouvant être prédéterminée.

15. Procédé selon la revendication 13, **caractérisé en ce qu'**au moins une partie du rayonnement thermique est réfléchie dans une direction pouvant être prédéterminée.

16. Procédé selon l'une des revendications 1 à 15,
**caractérisé en ce qu'**au moins une partie du rayonnement thermique est guidée par un champ micro-lenticulaire réglable.

17. Dispositif pour le formage par soufflage de récipients (2) en matière thermoplastique, qui présente au moins un parcours de chauffage (24), disposé le long d'une voie de transport d'une préforme (1), et un poste de soufflage (3), pourvu d'un moule (4), et dans lequel au moins un radiateur (30), disposé dans la zone du parcours de chauffage (24), présente un spectre d'émission de radiation d'une intensité de rayonnement maximale dans un gamme de longueurs d'onde de 0,4 micromètre à 1,0 micromètre, **caractérisé en ce que** le radiateur (30) présente une caractéristique de rayonnement avec une température de couleur d'au moins 3500° Kelvin, le radiateur (30) présente une caractéristique de rayonnement avec une puissance rayonnée d'au moins 50% de la puissance de rayonnement thermique totale, dans un gamme de longueurs d'onde de +/- 0,5 micromètre par rapport à la longueur d'onde de l'intensité de rayonnement maximale, et que le radiateur (30) présente un réflecteur sélectif en fréquence.

18. Dispositif selon la revendication 17, **caractérisé en ce que** le radiateur (30) présente une caractéristique de rayonnement avec une intensité de rayonnement maximale à une longueur d'onde d'environ 0,8 micromètre.

19. Dispositif selon revendication 17 ou 18, **caractérisé en ce que** le radiateur (30) présente une caractéristique de rayonnement avec une température de couleur d'environ 3500° Kelvin.

20. Dispositif selon revendication 17 ou 18, **caractérisé en ce que** le radiateur (30) présente une caractéristique de rayonnement avec une température de couleur d'au moins 5000° Kelvin.

21. Dispositif selon revendication 17 ou 18, **caractérisé en ce que** le radiateur (30) présente une caractéristique de rayonnement avec une température de couleur d'environ 6000° Kelvin.

22. Dispositif selon l'une des revendications 17 à 21, **caractérisé en ce que** le radiateur (30) présente une caractéristique de rayonnement avec une puissance rayonnée d'au moins 50% de la puissance de rayonnement thermique totale, dans un gamme de longueurs d'onde de +/-0,4 micromètre par rapport à la longueur d'onde de l'intensité de rayonnement maximale.

23. Dispositif selon l'une des revendications 17 à 22, **caractérisé en ce que** le radiateur (30) présente une caractéristique de rayonnement avec une puissance rayonnée d'au moins 50% de la puissance de rayonnement totale, dans une gamme de longueurs d'onde de +/- 0,3 micromètre par rapport à la longueur d'onde de l'intensité de rayonnement maximale.

24. Dispositif selon l'une des revendications 17 à 23, **caractérisé en ce que** le radiateur (30) est conçu en tant que lampe à décharge gazeuse.

25. Dispositif selon l'une des revendications 17 à 23, **caractérisé en ce que** le radiateur (30) est conçu en tant que circuit à LED.

26. Dispositif selon l'une des revendications 17 à 23, **caractérisé en ce que** le radiateur (30) est pourvu d'un réflecteur sélectif en fréquence.

27. Dispositif selon l'une des revendications 17 à 26, **caractérisé en ce que**, vu dans la direction du rayonnement du radiateur (30), un réflecteur sélectif en fréquence est disposé derrière la préforme (1) à chauffer.

28. Dispositif selon l'une des revendications 17 à 27, **caractérisé en ce que** le radiateur (30) est couplé avec une commande d'intensité électrique.

29. Dispositif selon l'une des revendications 17 à 27, **caractérisé en ce que** le radiateur (30) est couplé avec une commande d'intensité mécanique.

30. Dispositif selon la revendication 29, **caractérisé en ce que** la commande d'intensité mécanique est constituée par au moins un élément de déflexion réglable.

31. Dispositif selon la revendication 29, **caractérisé en ce que** la commande d'intensité mécanique est constituée par au moins un élément réfléchissant réglable pour le rayonnement thermique.

32. Dispositif selon l'une des revendications 17 à 31, **caractérisé en ce que** le radiateur (30) est pourvu d'un champ micro-lenticulaire pour la commande du rayonnement.
